# EUROPEAN PATENT APPLICATION

(11) **EP 0 693 529 A1**
(43) Date of publication of application: **24.01.1996**
(21) Application number: 95111543.5
(22) Date of filing: 21.07.1995
(51) Int. Cl.: C08L 29/04, C08L 51/06, C08J 5/18

(54) **Resin composition**

(30) Priority: 21.07.1994 JP 169755/94; 21.07.1994 JP 169760/94; 21.07.1994 JP 169761/94
(71) Applicant: SUMITOMO CHEMICAL COMPANY, LIMITED, Osaka (JP)
(72) Inventor: Kotani, Kozo, Toyonaka-shi, Osaka, 561 (JP); Sakaya, Taiichi, Takatsuki-shi, Osaka, 569 (JP); Kuroda, Ryuma, Ibaraki-shi, Osaka, 567 (JP)
(74) Representative: VOSSIUS & PARTNER

(57) **Abstract**

The present invention provides a resin composition which is superior in transparency, comprising:
(A) 100 parts by weight of a saponified ethylene-vinyl acetate copolymer (EVOH) having an ethylene content of 25 to 50 molar % and a saponification degree of not less than 96%, and
(B) 40 to 100000 parts by weight of a modified polyolefin resin wherein at least one part is modified with an unsaturated carboxylic acid or an anhydride thereof and an amount of the unsaturated carboxylic acid or anhydride thereof is 0.002 to 5% by weight, a crystallization temperature of all resin components in the resin composition being not more than 130°C.

## Description

The present invention relates to a transparent resin composition containing a saponified ethylene-vinyl acetate copolymer and a polyolefin resin. Films made using this composition exhibit superior transparency characteristics. Futhermore, the present resins are recyclable in the mamufacture of resin-based article having excellent transparency and clarity.

A saponified ethylene-vinyl acetate copolymer (hereinafter sometimes referred to as "EVOH") is among the presently commercially available thermoplastic resins, and is known to have excellent gas barrier properties. This resin has been widely used in applications in which materials must be protected against oxidation/deterioration such as, for example, in packaging for foodstuffs and drugs, or in containers, such as bottles, trays, etc. It is, however, highly unusual to use just a single layer of EVOH due to its inferior heat sealability, mechanical strength, water-vapor resistance, processability, and high cost, among other drawbacks. Accordingly, as a general matter EVOH is used as a multilayer material with a polyolefin resin, for example, polyolefin resin wherein at least one part is modified with a unsaturated carboxylic acid.

During industrial manufacturing of resin-based articles, such as multilayered articles, the proportion of scraps to the raw material can reach 20% or more, and sometimes even 50%. Consequently, in case of multilayer material manufactured from materials having good compatibility, it has long been desired to recycle scraps for reuse.

So too with articles made from EVOH and a polyolefin resin where scraps such as lugs, mold flashing, and the like are generated while manufacturing final products, such as multilayer materials, from resin compositions containing EVOH and a polyolefin resin. However, EVOH has an inferior compatibility with the polyolefin resin, and therefore a product obtained by reusing the recovered scraps of the multilayer material containing both EVOH and the polyolefin resin exhibits inferior transparency. Furthermore, when the recovered scraps contain a polyolefin resin modified with a unsaturated carboxylic acid, fish eye and gel are induced in the final re-molded product, and the surface appearance of the product can be substantially marred. Therefore, it has hitherto proven quite difficult to reuse these recovered scraps as the raw material.

This difficulty in developing a satisfactory recyclable transparent material containing a saponified ethylene-vinyl acetate copolymer and a polyolefin has long confronted the art. Among the proposed solutions is one described in Japanese Patent Kokai No. 60-212444 involving a resin composition comprising 100 parts by weight of EVOH, 186 to 99900 parts by weight of a polyolefin resin wherein at least one part is modified with an unsaturated carboxylic acid or an anhydride thereof, and 0.5 to 200 parts by weight of a plasticizer. However, this resin composition has insufficient transparency and is unsatisfactory from the further viewpoint that plasticizer bleeds out of the composition.

It has therefore remained an objective in the art to overcome the deficiencies associated with conventional EVOH-polyolefin composition and multilayered articles manufactured therefrom.

Therefore, an object of the present invention is to provide a resin composition which contains both a saponified ethylene-vinyl acetate copolymer and a polyolefin, which has a superior transparency, and makes it possible to reuse scraps of materials containing EVOH and a polyolefin resin.

Accordingly, an object of the present invention is to provide a resin composition which contains EVOH and a polyolefin resin and has superior transparency.

Another object of the present invention is to provide a resin composition which contains EVOH and a polyolefin resin and has excellent transparency and an additional value.

An additional object of the present invention is to provide a resin composition having satisfactory water-vapor resistance and gas barrier properties.

A further object of the present invention is to provide a resin composition containing a plasticizer while avoiding plasticizer bleed out from the composition.

Yet another object of the present invention is to provide a resin composition containing a saponified ethylene-vinyl acetate copolymer and a polyolefin which can be recycled i.e., re-used in the manufacture of resin-based articles.

These and other objects of the present invention are achieved with the present resin.

One resin composition comprises (A) 100 parts by weight of a saponified ethylene-vinyl acetate copolymer (EVOH) having an ethylene content of about 25 to 50 mole % and a saponification degree of not less than about 96%; and (B) about 40 to 100000 parts by weight of a modified polyolefin resin which is at least partly modified with an unsaturated carboxylic acid or an anhydride thereof and has an unsaturated carboxylic acid or anhydride content of about 0.002 to 5% by weight, and wherein the crystallization temperature of all resin components in the resin composition is not more than 130°C.

A resin composition of the present invention can further comprise a boron-containing resin composition (C) in an amount of about 1 to 500 parts by weight based on 100 parts by weight of EVOH (A). The boron-containing resin composition can be obtained by formulating a boron compound capable of reacting with an OH group to form a boric acid ester (e.g. boric acid, metal borate, organoboric acid ester, etc.) into a thermoplastic resin containing about 0.01 to 20% by weight of the OH group (such as a completely or partially saponified ethylene-vinyl acetate copolymer or the like) in a boron atom amount of about 0.01 to 10 parts by weight based on 100 parts by weight of EVOH (A) , in addition to the EVOH (A) and modified polyolefin resin (B).

Furthermore, a resin composition of the present invention can additionally comprise a plasticizer (D) in an amount of about 220 to 500 parts by weight based on 100 parts by weight of EVOH (A). The plasticizer is capable of plasticizing EVOH (A) and contains a component which is also a surfactant in an amount of not less than 60 parts by weight based on 100 parts by weight of EVOH (A), in place of the boron-containing resin composition (C). The resulting resin composition can be a masterbatch which has superior transparency and contains a high concentration of a surfactant.

A resin composition of the present invention comprises (A) 100 parts by weight of a saponified ethylene-vinyl acetate copolymer (EVOH) having an ethylene content of about 25 to 50 mole % and a saponification degree of not less than about 96%; ad (B) about 40 to 100000 parts by weight of a modified polyolefin resin wherein at least one part thereof is modified with a unsaturated carboxylic acid or an anhydride thereof and the unsaturated carboxylic acid or anhydride content thereof is about 0.002 to 5% by weight, and wherein the crystallization temperature of all resin components in the resin composition is not more than 130°C.

EVOH (A) in the present invention is a copolymer having an ethylene content of about 25 to 50 mole % and a saponification degree of not less than about 96%. By preference, the saponification degree is not less than about 98%. When the ethylene content is less than about 25 mole %, the water-vapor resistance of the resin composition becomes insufficient. When it exceeds 50 mole %, the gas barrier properties of the resin composition deteriorate.

The modified polyolefin resin (B) in the present invention is a resin wherein at least one part thereof is modified with an unsaturated carboxylic acid or an anhydride and the unsaturated carboxylic acid or anhydride content thereof is about 0.002 to 5% by weight, and is preferably about 0.04 to 1% by weight.

Exemplary polyolefin resins which can be modified include high-density polyethylene, moderate-density polyethylene, low-density polyethylene, a copolymer obtained by copolymerizing ethylene with vinyl acetate, acrylate or another α-olefin such as butene-1, hexene-1 or 4-methylpentene, among others, an ionomer resin, a propylene homopolymer, a graft polymer obtained by graft polymerizing a propylene homopolymer with ethylene, a copolymer obtained by copolymerizing propylene with ethylene or another α-olefin such as butene-1, hexene-1, or 4-methylpentene-1, among others, a modified polypropylene obtained by blending polypropylene with a rubber polymer; a butene-1 homopolymer, a 4-methylpentene-1 homopolymer, and a mixture of two or more the kinds of the above exemplified polyolefin resins.

Exemplary unsaturated carboxylic acids and anhydrides thereof which can be used in effecting a modified polyolefin include acrylic acid, methacrylic acid, benzoic acid, cinnamic acid, fumaric acid, itaconic acid, maleic acid, and maleic anhydride. Of these, maleic acid and maleic anhydride are preferred.

Conventional techniques for effecting modification of a polyolefin resin are known to those skilled in the art. For instance, the polyolefin can be modified by subjecting a melted polyolefin resin to graft polymerization with an unsaturated carboxylic acid or a anhydride thereof in the presence of a peroxide.

The modified polyolefin resin (B) can comprise a modified polyolefin resin, or, for instance, a mixture of a modified polyolefin resin and unmodified polyolefin resin. The above mixture can be directly obtained by a graft copolymerization reaction and also obtained by mixing a modified polyolefin resin and an unmodified polyolefin resin. In the latter case, for example, the mixture can be easily obtained by melt-kneading a multilayer structure material containing the modified polyolefin resin layer and the unmodified polyolefin resin layer. The latter method has economical advantages from the industrial perspective.

With respect to the resin composition containing; the EVOH (A) and modified polyolefin resin (B), the crystallization temperature of all resin components is not more than 130°C, and is preferably not more than 110°C. In the present invention the crystallization temperature of resin components is a value determined by following method. According to JIS K7121, 10 mg of test sample is allowed to stand at 220°C for five hours and subjected to scanning at a temperature decreasing rate of 10 °C/minute to record a DSC curve, using DSC manufactured by Perkin Elmer Co.. An extrapolated crystallization initiation temperature determined from this curve is taken as the crystallization temperature.

A resin composition embodiment according to the present invention can further comprise a boron-containing resin composition (C) in an amount of 1 to 500 parts by weight, preferably 50 to 500 parts by weight, based of 100 parts by weight of EVOH (A), in addition to the EVOH (A) and modified polyolefin resin (B), the boron-containing resin composition (C) can be obtained by formulating a boron compound capable of reacting with an OH group to introduce a boric acid ester into a thermoplastic resin composition containing about 0.01 to 20% by weight of the OH group in a boron atom amount of about 0.01 to 10 parts by weight based on 100 parts by weight of EVOH (A).

The thermoplastic resin to be used in obtaining (C) is not specifically limited, and can be one which has a OH group content of about 0.01 to 20% by weight, preferably about 0.5 to 10 % by weight, in the molecule. For example, this thermoplastic resin includes vinyl alcohol copolymers such as ethylene-vinyl alcohol copolymer, and the like; polysaccharides plastics such as starch, nitrocellulose, acetylcellulose, cellulose propionate, cellulose acetate butylate, ethyl cellulose, and the like; polyether resins such as polyformaldehyde, acetal copolymer, polyethylene oxide, polypropylene oxide, chlorinated polyether, phenoxy resin, polyphenylene oxide, and the like; hydroxyethyl acrylate, hydroxyethyl methacrylate, glycidyl methacrylate copolymer resins, and the like. A completely or partially saponified ethylene-vinyl acetate copolymer is preferred in view of the compatibility between the EVOH (A) and the modified polyolefin resin (B).

The boron compound is not specifically limited and can be any boron compound which reacts with the OH group to form a boric acid ester. Exemplary boron compounds include boric acid, metal borate (e.g. alkali-metal borates such as borax, etc.), organoboric acid ester (e.g. alkyl-borates such as methyl borate, ethyl borate, propyl borate, butyl borate and the like, and aryl-borates such as phenyl borate, and the like), and the like. By preference, a solution of the boron compound in a suitable solvent is used in order to improve the dispersion properties at the time of formulating into the above thermoplastic resin. For example, an aqueous boric acid solution, an alcohol solution of boric acid, an aqueous metal borate solution, a toluene solution of organoboric acid ester, or a xylene solution of organoboric acid ester, can be used. From the industrial perspective, an aqueous solution is particularly advantageous. In that case, it is preferred to adjust the pH of the solution to inhibit the resin against gelling and deteriorating. Furthermore, an aqueous borax solution is preferred when using an ethylene-vinyl alcohol copolymer as the thermoplastic resin containing 0.01 to 20% by weight of the OH group. The amount of the boron compound is not specifically limited and generally corresponds to the boron atom amount of about 0.01 to 10 parts by weight, but preferably about 0.1 to 5 parts, by weight, based on 100 parts by weight of EVOH (A).

The boron-containing resin composition (C) can contain a thermoplastic resin containing an OH group, a boron compound, and a boric acid ester formed by a reaction between the thermoplastic resin and the boron compound.

The boron-containing resin (C) can be prepared, for example, by melt-kneading the thermoplastic resin containing an OH group and a solution of the boron compound and removing the solvent.

The above resin composition may contain further components, in addition to the components (A), (B) and (C), such as rubber components, various stabilizers, nucleating agents, colorants, lubricants, and the like unless the effect of the present invention is adversely affected.

The resin composition containing the components (A), (B) and (C) has excellent transparency and avoids plasticizer bleed out.

In another embodiment, the resin composition according to the present invention further comprises a plasticizer (D) in an amount of about 220 to 500 parts by weight based on 100 parts by weight of EVOH (A). The plasticizer is capable of plasticizing EVOH (A) and contains a component which is also a surfactant in an amount of not less than 60 parts by weight based on 100 parts by weight of EVOH (A). In this embodiment plasticizer (D) can replace the boron-containing resin (C). In this case, the resulting resin composition has excellent transparency, and is also capable of being a masterbatch containing an extremely high concentration of a surfactant.

Plasticizers for plasticizing EVOH (A) include exemplary plasticizers having no surface activity capability include, among others, glycerin; polyglycerins such as diglycerin, triglycerin, and the like; polyhydric alcohols such as ethylene glycol, diethylene glycol, polyethylene glycol, sorbitol, pentaerythritol, propylene glycol, and the like; phosphoric acid esters such as triethyl phosphate, trioctyl phosphate, and the like; ethanolamine salts such as ethanolacetamide, ethanolformamide, triethanolamine acetate, and the like; carboxylic acid esters mono esters such as mono(β,γ-dihydroxypropyl)monocellosolve succinate, (β,γ-dihydroxypropyl) glycolate, and the like. Among these plasticizers diglycerin and polyhydric alcohols are preferred.

The plasticizer which is a surfactant can be at least one nonionic, anionic or cationic surfactant. For example, such surfactants include a polyoxyalkylene ether, a partial ester of polyhydric alcohol, a partial ester of alkylene oxide adduct of polyhydric alcohol, a higher alcohol sulfate alkali metal salt, alkylaryl sulfonate, a quaternary ammonium salt, aliphatic amine derivative, or the like. Examples thereof include polyoxyethylene lauryl ether, polyoxystearyl ether, polyoxynonylphenyl ether, polyethylene glycol monopalmitate, polyethylene glycol monostearate, polyoxyethylene sorbitan monopalmitate, glycerin monolaurate, glycerin monopalmitate, glycerin monostearate, glycerin monooleate, pentaerythritol monolaurate, sorbitan monopalmitate, sorbitan monobehenate, sorbitan monostearate, sorbitan distearate, diglycerin monooleate, diglycerin sesquioleate, diglycerin monolaurate, diglycerin dioleate, triglycerin dioleate, sodium lauryl sulfate, sodium dodecylbenzene sulfonate, sodium butylnaphthalene sulfonate, cetyltrimethylammonium chloride, dimethylethylbenzylammonium chloride, dodecylamine hydrochloride, laurylamide laurate ethylphosphate, triethylcetylammonium iodide, oleylaminodiethylamine hydrochloride, basic pyridinium salt of dodecylpyridinium sulfate and the like.

The plasticizer (D) is formulated in the amount of about 220 to 500 parts by weight, preferably about 250 to 400 parts by weight, based on 100 parts by weight of EVOH (A) in the resin composition according to the present invention. When the amount of the plasticizer is less than about 220 parts by weight, a resin composition having sufficient transparency cannot be obtained. On the other hand, when it exceeds about 500 parts by weight, phase separation between the plasticizer and resin component occurs and the plasticizer bleeds onto the surface of the resin composition.

The ratio of the plasticizer having no surface activity capability to the surfactant is not specifically limited if the present resin composition contains the plasticizer which is also the surfactant in the amount of not less than about 60 parts by weight, and preferably in the amount of not less than about 100 parts by weight based on 100 parts by weight of EVOH (A). When the compatibility between the surfactant and EVOH (A) is small, the plasticizer having no surface activity capability is preferably formulated in the amount of not less less than 30 parts by weight based of 100 parts by weight of EVOH (A) so as to improve the compatibility. When the amount of the surfactant is less than 60 parts by weight, the above amount of the plasticizer cannot be formulated and, therefore, the sufficient transparency cannot be obtained. When the amount of the surfactant is more than 60 parts by weight, the resin composition has superior transparency and, at the same time, the resin composition can be a masterbatch containing a high concentration of the surfactant. Therefore, the plasticizer (D) can comprise a plasticizer-surfactant component and a plasticizer non-sufactant component.

When using the plasticizer having no surface activity capability in combination with the plasticizer which is also the surfactant, for example, it is preferred to formulate plasticizers having a good compatibility (e.g. combination of a polyhydric alcohol and a fatty acid ester of the polyhydric alcohol, combination of diglycerin and a fatty acid ester of diglycerin, etc.) so as to obtain a uniform resin composition.

In case of this latter (D)-containing embodiment, the modified polyolefin resin (B) is generally formulated in the amount of about 40 to 100000 parts by weight, based on 100 parts by weight of EVOH (A). In order to achieve the properties associated with carrying a high concentration of the surfactant, it is preferably formulated at the amount of about 100 to 20000 parts by weight, and more preferably in an amount of about 200 to 10000 parts.

In addition to the components (A), (B) and (D), this embodiment of the resin composition can contain additional resin and/or rubber components, and additives such as various stabilizers, nucleating agents, colorants, lubricants, and the like unless the effect of the present invention is adversely affected.

The various resin composition embodiments of the present invention can be produced by melt-kneading each component together in a conventional kneader, or, for instance, they can also be produced by formulating desired components together with scraps of multilayer articles based on at least a layer of EVOH (A) and a layer of the modified polyolefin resin (B).

The resin composition of the present invention can be used alone as a raw material for producing a single-layer or multi-layer resin film or sheet, a fiber, a resin molded article (e.g. a container) etc.. Furthermore, the resin composition of the present invention can be used in combination with diverse thermoplastic resins for these purpose.

Since the surfactant among the plasticizer (D) to be formulated in the resin composition of the present invention is generally used as an anti-fogging agent, the resin composition containing the surfactant of the present invention can be suitably used as a raw materials in the manufacture of agricultural films, packing films, etc., for which anti-fogging properties are required. Furthermore, the resin composition of the present invention can contain the surfactant in the concentration of 7% or more by weight and, therefore, it can be a masterbatch having the surfactant in high concentration, which has never been accomplished, heretofore. A conventional masterbatch of a surfactant contains the surfactant in a lower concentration, in which a new resin is exclusively used as the matrix. In the resin composition of the present invention, the scrap resin can be used as the matrix and a high concentration of the surfactant can be achieved, which results in large reduction of the production cost of the resin product having anti-fogging properties.

When using the resin composition containing the plasticizer (D) of the present invention (sometimes referred to as an "anti-fogging resin composition") as the raw material of a laminated film, the anti-fogging resin composition can also be applied to an outermost layer and an intermediate layer of the laminated film, but it is preferably used as the outermost layer of the laminated film so as to exhibit high anti-fogging effect.

Structures obtainable from the present compositions can have laminated films. For example, film-structures such as anti-fogging resin composition layer/polyolefin layer/anti-fogging resin composition layer, polyolefin layer/anti-fogging resin composition layer/polyolefin layer, anti-fogging resin composition layer/EVOH layer/anti-fogging resin composition layer, anti-fogging resin composition layer/polypropylene layer/EVOH layer/polypropylene layer/anti-fogging resin composition layer and the like are obtainable.

Processes for producing the above-described laminated film are not specifically limited. The laminated film can be produced according to known procedures such as, for example, a co-extrusion process, an in-line laminate process or the like. Additional processes include stretching processing such as monoaxial stretching, zone stretching, flat successive stretching, simultaneous biaxial stretching, tubular stretching, and the like. Our resin compositions and films therefrom are described in Japanese Application 169755/1994 filed July 21, 1994, Japanese Application 169760/1994 filed July 21, 1994, and Japanese Application 169761/1994, filed July 21, 1994, the complete disclosure of which are incorporated herein by reference.

### EXAMPLES

The following non-limiting Examples further illustrate the present invention.

In the following Examples, a composition obtained by mixing a saponified ethylene-vinyl acetate copolymer (EVOH), a polyolefin and a polypropylene modified with malein anhydride is referred to as a "resin composition for regeneration", and a composition obtained by subjecting this resin composition to a treatment for decreasing the crystallization temperature is referred to as a "resin composition for reduction". A film obtained by mixing the resulting resin composition for reduction with the other polyolefin resin using a pellet blender and molding the mixture using a film molding machine is referred to as a "reduced film". Furthermore, when the reduced film has a multilayer structure, a layer wherein the resin composition for reduction is formulated is referred to as a "layer of the resin composition layer for reduction".

The test methods of Examples and Comparative Examples are as follows:

### 1. Measurement of haze

A film was washed with acetone and the haze of the film was measured according to JIS K7105 in a temperature controlled room (23°C, 50% RH) using a direct-reading haze computer HGM-2DP manufactured by Suga Shikenki Co., Ltd.. The smaller the value of haze becomes, the better the transparency of the film becomes.

### 2. Measurement of NAS

A film was washed with acetone and a narrow angle scattering (NAS) of the film was measured in a temperature controlled room (23°C, 50% RH) using a visual transparency testing machine (Light Scattering Meter manufactured by Toyo Seiki Co., Ltd.). The smaller the value of NAS becomes, the better the transparency of the film becomes.

### 3. Measurement of crystallization temperature

According to JIS K7121, a sample (10 mg) was allowed to stand at 220°C for five hours and subjected to scanning at a temperature decreasing rate of 10°C/minute to record a DSC curve, using DSC manufactured by Perkin Elmer Co.. An extrapolated crystallization initiation temperature determined from this curve was taken as the crystallization temperature. When a plurality of peaks are observed, the crystallization temperature of a component having the highest crystallization temperature was taken as the crystallization temperature.

### Example 1

### Preparation of resin composition for regeneration

As shown in Table 1, a saponified ethylene-vinyl acetate copolymer (EVOH, manufactured by Nihon Gosei Kagaku Kogyo Co., Ltd.) having an ethylene content of 44 mole %, a saponification degree of not less than 99%, a density of 1.14 g/ml and a melt flow rate (hereinafter referred to as "MFR") of 3.5 g/10 minutes (measured according to JIS K7210 and under the following conditions: a temperature of 210°C, and a load of 2.16 kgf), a modified polypropylene (hereinafter abbreviated to "modified PP") having a density of 0.89 g/ml, a MFR of 5.7 g/10 minutes (measured under the following conditions: a temperature of 230°C, and a load of 2.16 kgf) and a maleic anhydride content of 0.2% by weight, a higher α-olefin linear polyethylene (manufactured by Sumitomo Chemical Co., Ltd., hereinafter abbreviated to "LL") having a density of 0.912 g/ml and a MFR of 2 g/10 minutes (measured under the following conditions: a temperature of 190°C, and a load of 2.16 kgf) and an ethylene-propylene random copolymer (manufactured by Sumitomo Chemical Co., Ltd., hereinafter abbreviated to "PP") having an ethylene content of 5% by weight, a density of 0.89 g/ml and a MFR of 3.5 g/10 minutes (measured under the following conditions: a temperature of 230°C, and a load of 2.16 kgf) were kneaded in a proportion (weight ratio) of 100:217:108:408 (EVOH:modified PP:LL:PP) to obtain a resin composition for regeneration.

### Preparation of boron-containing resin composition

An ethylene-vinyl acetate copolymer (manufactured by Sumitomo Chemical Co., Ltd., hereinafter referred to as "raw EVA") having a MFR of 70 g/10 minutes (measured under the following conditions: a temperature of 190°C, and a load of 2.16 kgf) and a vinyl acetate content of 10% by weight was saponified in an extruder according to the process described in M. LAMBLA et al., POLYMER ENGINEERING SCIENCE, 27, 1221 (1987), the complete disclosure of which is incorporate herein by reference, to obtain a saponified ethylene-vinyl acetate copolymer (a saponification degree of 50% and an OH group content of 1.3% by weight). Then, an aqueous 4.6% sodium borate (Na₂B₄O₇) solution was added in the amount of 37 parts by weight based on 100 parts by weight of the saponified ethylene-vinyl acetate copolymer wihle melt-kneading (temperature: 150°C) in the extruder, and the mixture was sufficiently kneaded while removing water vapor to obtain a borate-crosslinked saponified ethylene-vinyl acetate copolymer (hereinafter referred to a "modified EVA"). The concentration of boron in the modified EVA is 0.37% by weight.

### Preparation of resin composition for reduction

A resin composition for reduction was obtained by kneading the resin composition for regeneration with a modified EVA In the amount of 208 parts by weight based on 100 parts by weight of EVOH in the composition using a same-direction twin-screw extruder PCM 45 manufactured by Ikegai Co., Ltd.. The kneading was conducted at a cylinder temperature of 200°C, a screw speed of 200 rpm, and an ejection speed of 9 kg/hour.

### Preparation of reduced film

This resin composition for reduction was blended with LL (manufactured by Sumitomo Chemical Co., Ltd.) having a density of 0.912 g/ml and a melt flow rate (MFR) of 2 g/10 minutes (measured under the following conditions: a temperature of 190°C, and a load of 2.16 kgf) in the proportion (weight ratio) of 15:85 (resin composition for reduction:LL) using a pellet blender, and the mixture was extruded through a circular die at a resin temperature of 200°C and molded according to an inflation system (a blow-up ratio of 2, a take-off rate of 6 m/minute) to obtain a reduced film (thickness of 40 µm). The resulting reduced film had superior transparency.

### Examples 2 and 3

Reduced films were prepared according to Example 1, except that the weight ratio of the resin composition for reduction to LL was changed to 10:90 and 5:95, respectively. The resulting reduced films exhibited superior in transparency.

### Comparative Examples 1 to 3

Reduced films were prepared according to Examples 1 to 3, except for using no modified EVA. The resulting films were inferior to those of Examples 1 to 3 in transparency, respectively.

### Example 4

A reduced film was prepared according to Example 1, except for using the aqueous 4.6% sodium borate (Na₂B₄O₇) solution in the amount of 9 parts by weight based on 100 parts by weight of the saponified ethylene-vinyl acetate copolymer in the preparation of the modified EVA. The resulting film had superior transparency.

### Example 5

A reduced film was prepared according to Example 4, except for changing the amount of the modified EVA to 450 parts by weight based on 100 parts by weight of EVOH in the resin composition for regeneration. The resulting film had superior transparency.

### Example 6

A reduced film was prepared according to Example 1, except that the ethylene-vinyl acetate copolymer (manufactured by Sumitomo Chemical Co., Ltd.) having a melt flow rate (MFR) of 300 g/10 minutes (measured under the following conditions: a temperature of 190°C, and a load of 2.16 kgf) and having a vinyl acetate content of 20% by weight was used as the raw EVA to produce the saponified ethylene-vinyl acetate copolymer having a saponification degree of 85% and an OH group content of 3.1% by weight in the preparation of the modified EVA. The resulting film had superior transparency.

### Example 7

A reduced film was prepared according to Example 1, except for changing the amount of the modified EVA to 93 parts by weight based on 100 parts by weight of EVOH in the resin composition for regeneration. The resulting film had superior transparency.

### Example 8

A resin composition for regeneration obtained according to Example 1, except for changing the proportion of EVOH:modified PP:LL:PP to 100:200:425:108, was supplied to a same-direction twin-screw extruder (PCM45 manufactured by Ikegai Co., Ltd.), and the kneading was conducted while diglycerin (non-surfactant) and diglycerin sesquiolate (surfactant) (both are manufactured by Sakamoto Yakuhin Co., Ltd.) as a plasticizer were poured into the middle part of a cylinder of the extruder using a pump for liquid to obtain a resin composition for reduction. The kneading condition were as follows: a cylinder of the extruder with temperature of 200°C, a screw speed of 200 rpm, and an ejection speed of 9 kg/hour.

This resin composition for reduction was mixed with LL in the proportion (weight ratio) of 20:80 (resin composition for reduction:LL) using a pellet blender, and the mixture was molded according to the same processing condition as that of Example 1 to obtain a reduced film (thickness of 40 µm). The resulting reduced film had superior transparency.

### Example 9

A resin composition for regeneration was obtained according to Example 8, except for changing the proportion of EVOH:modified PP:LL:PP to 100:60:600:100. Except for using diglycerin (non-surfactant) and diglycerin monooleate (surfactant) (both are manufactured by Sakamoto Yakuhin Co., Ltd.) as the plasticizer in the amount described in Table 4, the resin composition for regeneration was treated to obtain a resin composition for reduction. Then, the molding was conducted to obtain a reduced film according to the procedures in Example 8. The resulting reduced film had superior transparency.

### Example 10

A resin composition for regeneration was obtained according to Example 8, except for changing the proportion of EVOH:modified PP:LL:PP to 100:608:100:0. Except for using diglycerin (non-surfactant) and diglycerin monolaurate (surfactant) (both are manufactured by Sakamoto Yakuhin Co., Ltd.) as the plasticizer in the amount described in Table 4, the resin composition for regeneration was treated to obtain a resin composition for reduction as in Example 8. Then, the molding was conducted to obtain a reduced film according to the procedures in Example 8. The resulting reduced film had superior transparency.

### Comparative Example 4

A film was produced according to Example 8, except for using diglycerin sesquioleate (surfactant) as the sole plasticizer in the amount of 40 parts by weight based on 100 parts by weight of EVOH in the resin composition for regeneration. The resulting film was inferior to that of Example 8 in transparency.

### Comparative Example 5

A film was produced according to Example 9, except for using diglycerin (non-surfactant) as the sole plasticizer in the amount of 100 parts by weight based on 100 parts by weight of EVOH in the resin composition for regeneration. The resulting film was inferior to that of Example 9 in transparency.

### Comparative Example 6

A film was produced according to Example 10, except for using no plasticizer. The resulting film was inferior to that of Example 10 in transparency.

### Example 11

A modified EVA was obtained according to Example 6 except for using the aqueous 4.6% sodium borate (Na₂B₄O₇) solution in the amount of 480 parts by weight based on 100 parts by weight of the saponified ethylene-vinyl acetate copolymer in the preparation of the modified EVA. Except for using using this modified EVA, a resin composition for reduction was obtained according to the procedures of Example 7.

By using this resin composition for reduction as an inner layer and a higher α-olefin linear polyethylene (manufactured by Sumitomo Chemical Co. Ltd.) having a density of 0.925 g/ml and a melt flow rate (MFR) of 0.5 g/10 minutes (measured under the following conditions: a temperature of 190°C, and a load of 2.16 kgf) as an outer layer followed by inflation molding, a three-layer film wherein a thickness of the outer layer (1), inner layer and outer layers (2) are all 4 µm, was obtained. The processing conditions were as follows: the die resin temperature was 180°C, the blow-up ratio was 1.5, and the take-off speed was 20 m/minute. The resulting film had superior transparency.

### Comparative Example 7

A three-layer film was prepared according to Example 11, except that the resin composition for regeneration used in Examples 11 was used as the resin composition for reduction as it was without formulating the modified EVA. The resulting film had inferior transparency.

### Example 12

A three-layer film was prepared according to Example 11, except for changing the thickness of the outer layer (1), inner layer and outer layers (2) to 4.8 µm, 2.4 µm and 4.8 µm, respectively. The resulting film had superior transparency.

### Comparative Example 8

A three-layer film was prepared according to Example 12, except that the resin composition for regeneration used in Example 12 was used as the resin composition for reduction as it was without formulating the modified EVA, The resulting film was inferior in transparency.

### Comparative Examples 9

A trial of preparing a resin composition for reduction was made according to Example 1 except for formulating diglycerin (plasticizer having no surface activity capability) in the amount of 234 parts by weight based on 100 parts by weight of EVOH in the resin composition for regeneration without using any surfactant. No resin composition for reduction could be obtained because phase separation occurred between the plasticizer and resin composition for regeneration.

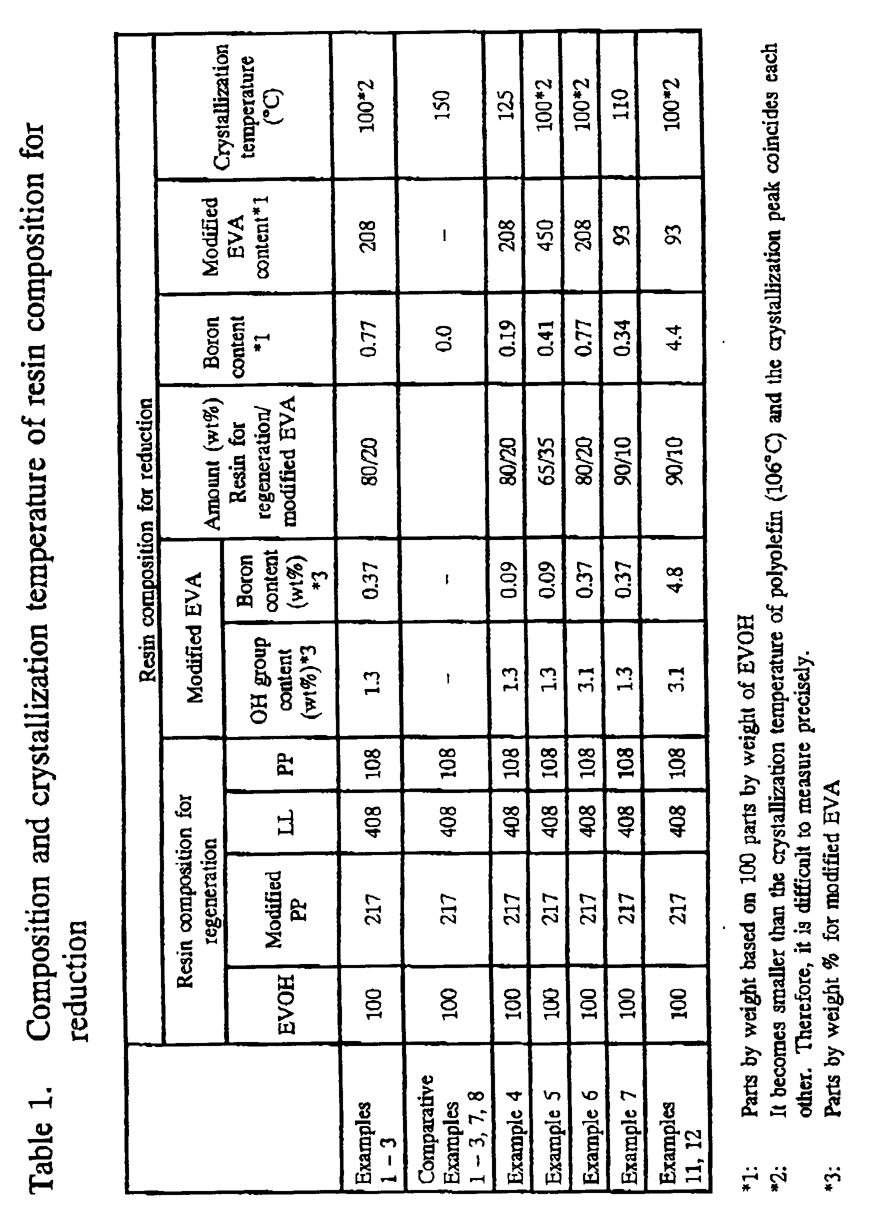

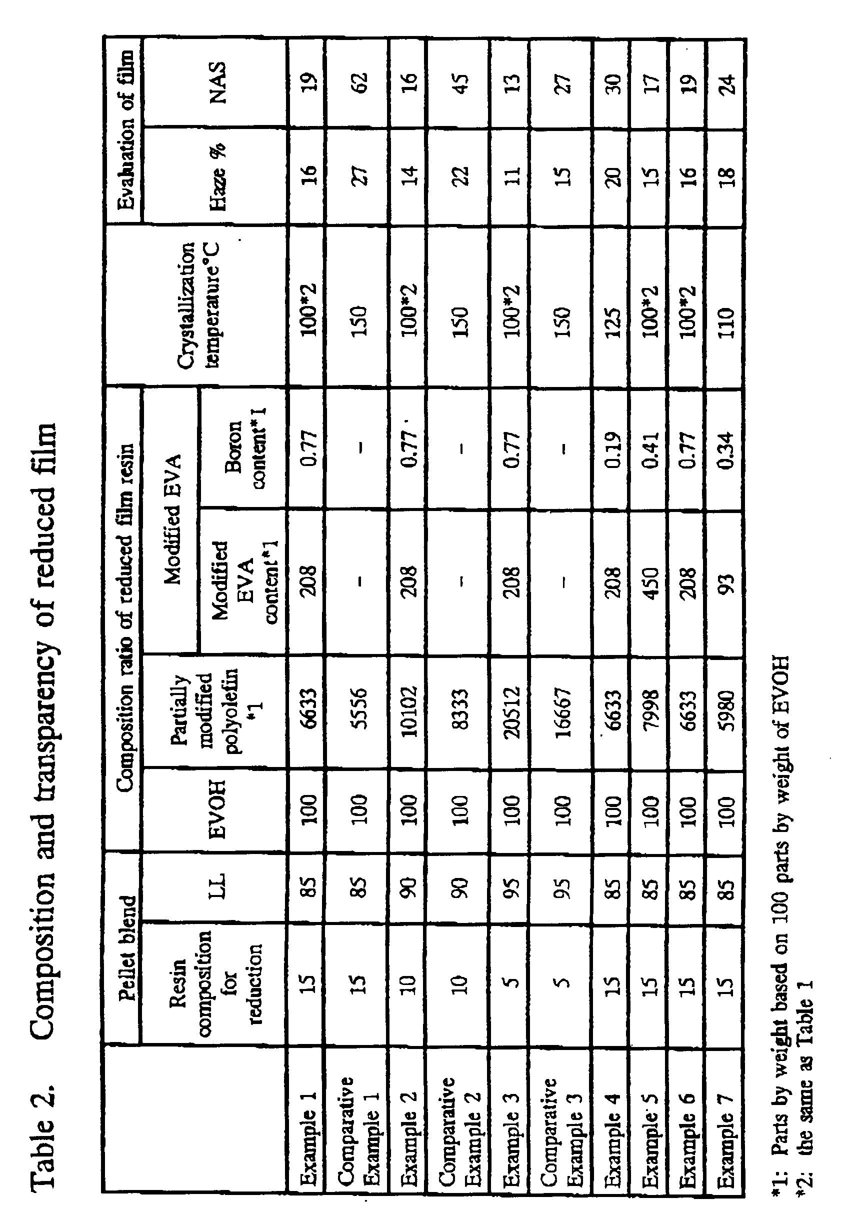

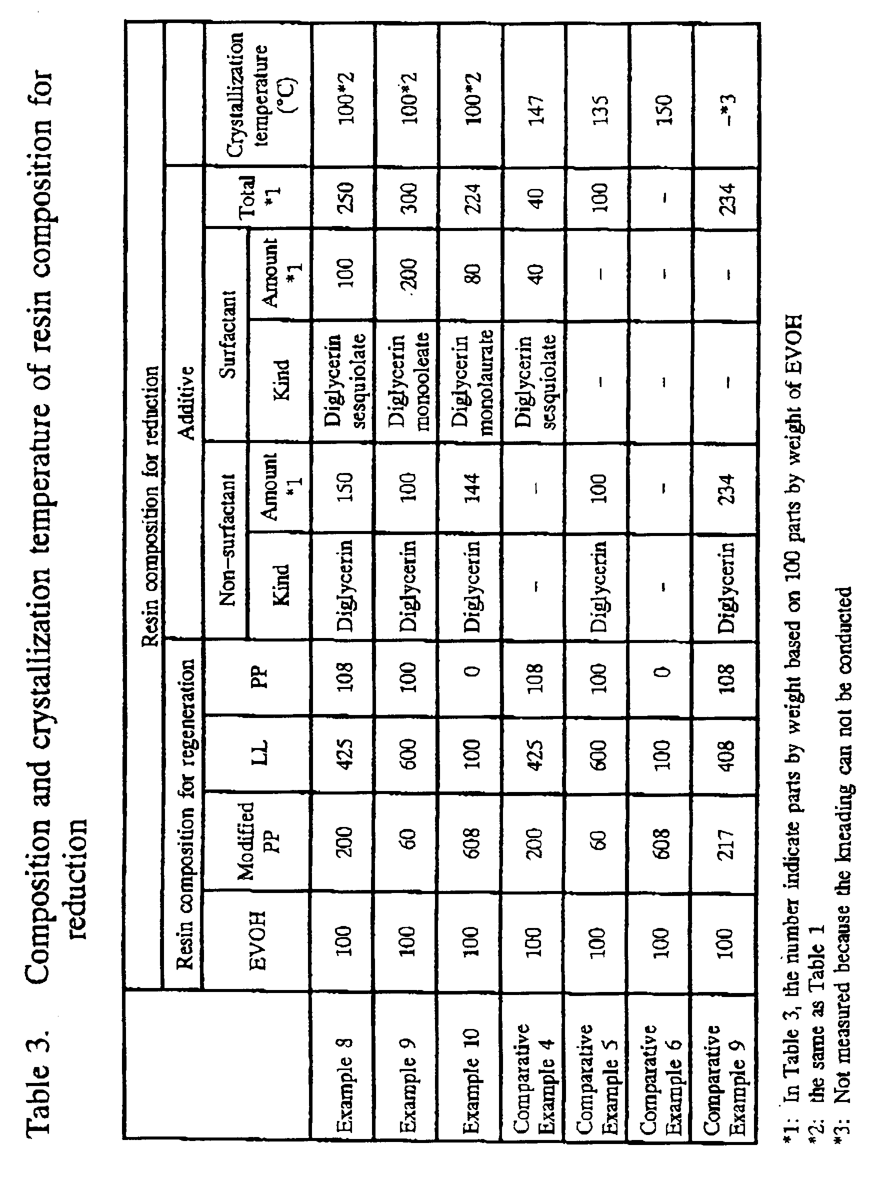

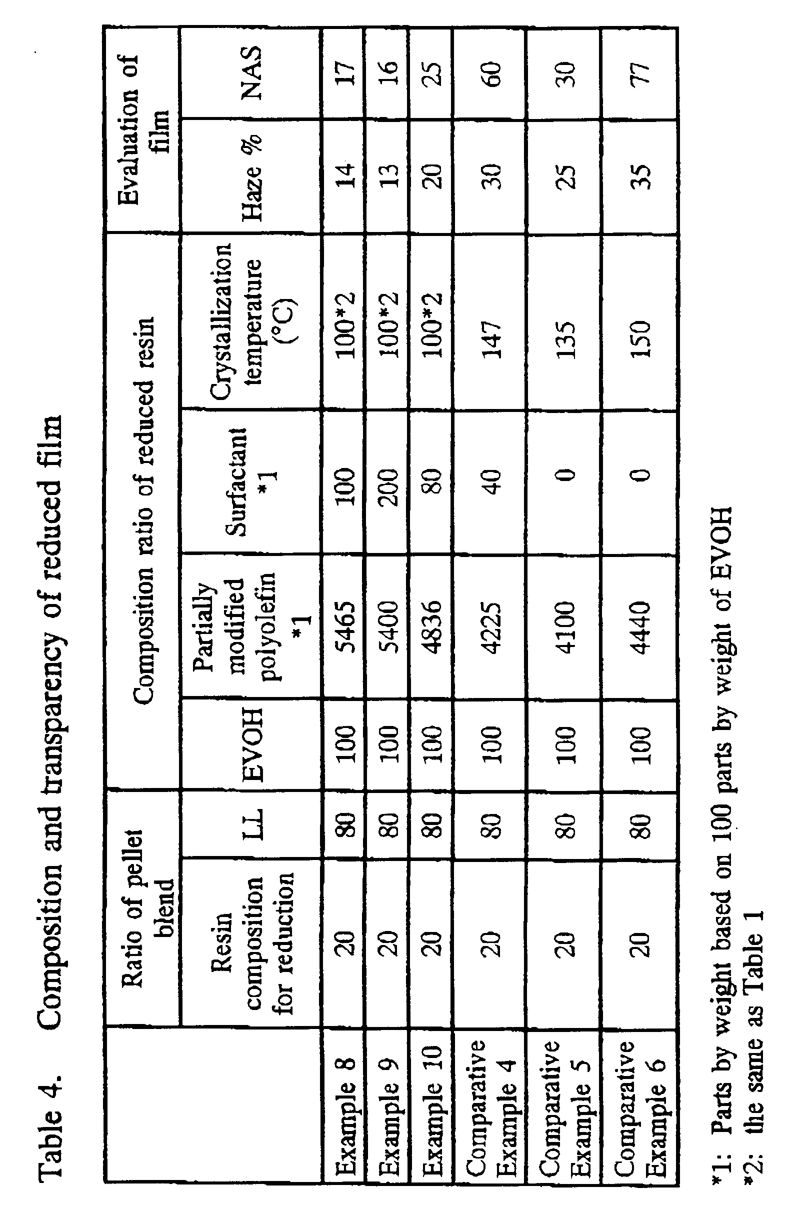

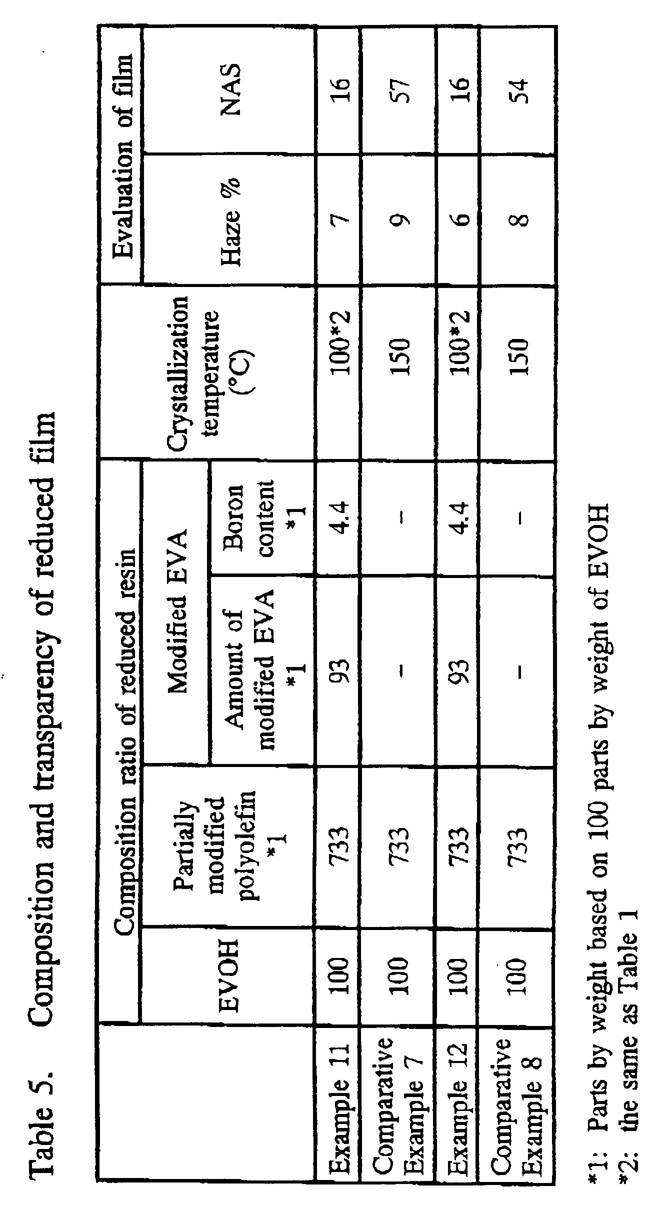

## Claims

1. A resin composition comprising:
(A) 100 parts by weight of a saponified ethylene-vinyl acetate copolymer (EVOH) having an ethylene content of about 25 to 50 mole % and a saponification degree of not less than about 96%, and
(B) about 40 to 100000 parts by weight of a modified polyolefin resin wherein at least one part is modified with an unsaturated carboxylic acid or a anhydride thereof and the unsaturated carboxylic acid or anhydride content of said modified polyolefin resin is about 0.002 to 5% by weight, and wherein the crystallization temperature of all resin components in the resin composition is not more than 130°C.

2. The resin composition according to claim 1, further comprising a boron-containing resin composition (C) in an amount of 1 to 500 parts by weight based on 100 parts by weight of EVOH (A).

3. The resin composition according to claim 2, wherein the boron-containing resin composition is obtained by formulating a boron compound capable of reacting with an OH group to form a boric acid ester into a thermoplastic resin composition containing about 0.01 to 20% by weight of the OH group in a boron atom amount of about 0.01 to 10 parts by weight based on 100 parts by weight of EVOH (A).

4. The resin composition according to claim 3, wherein the thermoplastic resin containing 0.01 to 20% by weight of the OH group is a completely or partially saponified ethylene-vinyl acetate copolymer.

5. The resin composition according to claim 3 or 4, wherein the boron compound is a boric acid, a metal borate or an organoboric acid ester.

6. The resin composition according to any of claims 1 to 5, further comprising a plasticizer (D) in a total amount of about 220 to 500 parts by weight based on 100 parts by weight of EVOH (A) and containing a component which is also a surfactant among the plasticizer (D) in an amount of not less than 60 parts by weight based on 100 parts by weight of EVOH (A).

7. The resin composition according to claim 6, wherein the plasticizer (D) contains a plasticizer which is not a surfactant in an amount of not less than 30 parts by weight based on 100 parts by weight of EVOH (A).

8. The resin composition according to claim 6 or 7, wherein the plasticizer which is also the surfactant is a fatty acid ester of a polyhydric alcohol or a fatty acid ester of diglycerin.

9. The resin composition according to any of claims 6 to 8, wherein the plasticizer which is not the surfactant is a polyhydric alcohol or diglycerin.

10. The resin composition according to any of claims 6 to 9, wherein the amount of the modified polyolefin resin (B) is about 100 to 20000 parts based on 100 parts by weight of EVOH (A).

11. A laminated film comprising at least one layer of a resin composition according to any of claims 1 to 10.

12. The laminated film according to claim 11, wherein at least one layer of the resin composition is an outermost layer.
